# EUROPÄISCHE PATENTSCHRIFT

(11) **EP 1 933 084 B1**
(45) Veröffentlichungstag und Bekanntmachung des Hinweises auf die Patenterteilung: **27.01.2010**
(21) Anmeldenummer: 07024140.1
(22) Anmeldetag: 12.12.2007
(51) Int. Cl.: F21V 15/01, F21V 17/00

(54) **Scheinwerfer für ein Fahrzeug**
Headlamp for a vehicle
Phare pour un véhicule

(30) Priorität: 15.12.2006 DE 202006018972 U
(43) Veröffentlichungstag der Anmeldung: 18.06.2008
(73) Patentinhaber: TRW Automotive Electronics & Components GmbH, 78315 Radolfzell (DE)
(72) Erfinder: Loewe, Hubert, 66919 Weselberg (DE)
(74) Vertreter: Prinz & Partner

(56) Entgegenhaltungen:
- EP-A- 0 224 739
- DE-A1- 4 235 289
- DE-A1- 10 130 710
- DE-A1- 19 541 217

## Beschreibung

Die Erfindung betrifft einen Scheinwerfer gemäß dem Oberbegriff des Anspruchs 1.

Aus dem Stand der Technik sind Fahrzeugscheinwerfer bekannt, die ein Gehäuse mit einem darin angeordneten Leuchtmittel aufweisen. Das Gehäuse ist dabei beispielsweise mittels Drahtklammern an einem Reflektor angebracht. Oftmals sind die Gehäuse zweiteilig, wobei die beiden Teile durch das Einsetzen von Schraubbolzen zusammengefügt werden. Soll das Leuchtmittel ersetzt werden, so müssen die Schraubbolzen entfernt, die Drahtklammern gelöst und alle Teile für das erneute Zusammensetzen bereitgestellt werden. Ein Problem bei solchen Scheinwerfern besteht deshalb darin, daß der Zusammenbau aufwendig und teuer und die Wartung kompliziert ist.

In der EP 0 224 739 A1 list ein Fahrzeugscheinwerfer mit einem Traggestell, einem Reflektor und einer zwischen Traggestell und Reflektor angeordneten Ringdichtung beschrieben. Die Ringdichtung wird dabei zunächst auf einen zylindrischen Randbereich des Traggestells unter Vorspannung aufgeschoben und anschließend beim Aufschieben eines mit Auflaufschräge versehenen zylindrischen Randbereichs des Reflektors zusammengepresst und zwischen die zylindrischen Randbereiche eingerollt.

Die DE 101 30 710 A1 zeigt einen Scheinwerfer mit einem Scheinwerferkörper, der die Funktion eines Außengehäuses, eines Parabolreflektors und eines Trägers für weitere Scheinwerferbauteile erfüllt. Zwischen dem Scheinwerferkörper und einer Fahrzeugkarosserie sowie zwischen dem Scheinwerferkörper und einer Linse ist dabei jeweils ein Dichtelement vorgesehen.

In der DE 42 35 289 A1 ist eine Heckleuchte für ein Fahrzeug offenbart, wobei an das Leuchtengehäuse ein elastisches Element mit Sichtschutzlippe angespritzt ist, um den Übergang zwischen Heckleuchte und Fahrzeugkarosserie optisch vorteilhafter zu gestalten.

Die DE 195 41 217 A1 beschreibt eine Kennzeichenleuchte, bei der eine erste Dichtung zwischen dem Leuchtengehäuse und dem Einbauabschnitt einer Fahrzeugkarosserie sowie eine zweite Dichtung zwischen dem Leuchtengehäuse und einer Lichtscheibe vorgesehen ist. Die Dichtungen sind dabei zusammen mit dem Gehäuse in einem Zweikomponentenspritzgießverfahren hergestellt.

In der EP 1 637 394 A2 ist eine segmentiert ausgebildete Leuchtvorrichtuna für Kraftfahrzeug gezeigt, mit mehreren Kammern, die jeweils durch eine Leuchteinheit gebildet werden, und einem Blendrahmen, in dem mehrere, jeweils den Leuchteinheiten zugeordnete Öffnungen vorgesehen sind. An einer Vorderseite des Blendrahmens ist eine Abschlussscheibe befestigt und an einer Rückseite sind Leuchtmodule angebracht, wobei die Rückseite des Blendrahmens zur Anbindung an einen vorderen Gehäuserand der Leuchtmodule angepasst ausgebildet ist.

Die EP 0 013 245 A1 offenbart einen Kraftfahrzeug-Scheinwerfer gemäß dem Oberbegriff des Anspruchs 1, mit einem Reflektor und einer Abdeckscheibe, die vom Reflektor durch ein Zwischenstück getrennt ist, wobei der Reflektor durch eine Schwenkvorrichtung mit dem Zwischenstück verbunden ist, und wobei zwischen dem Reflektor und dem Zwischenstück eine Dichtung vorgesehen ist, die den Scheinwerfer dicht verschließt.

Die Aufgabe der Erfindung besteht darin, einen Scheinwerfer für ein Fahrzeug bereitzustellen, der einfach zusammengebaut werden kann.

Zu diesem Zweck sieht die Erfindung einen Scheinwerfer mit den Merkmalen des Anspruchs 1 vor. Erfindungsgemäß wird der Zusammenbau des Scheinwerfers sehr vereinfacht, da die Dichtung direkt an das Gehäuse angeformt ist. Die Dichtung muß also nicht nachträglich aufwendig am Gehäuse montiert werden, was die Herstellungskosten des Scheinwerfers verringert.

Vorzugsweise ist die Dichtung an das Gehäuse angespritzt. Dabei wird zum Beispiel das In-Mold-Assembly-Verfahren benützt, das aus der DE 102 02 760 A1 bekannt ist. Bei diesem Verfahren wird kurz zusammengefaßt ein erstes Spritzgußteil in einer ersten Form gefertigt. Dann wird das erste Spritzgußteil aus der ersten Form entnommen und in eine zweite Form eingebracht. Dabei härtet das erste Spritzgußteil so weit aus und gewinnt so weit an Festigkeit, daß ein Spritzgußmaterial in die zweite Form eingespritzt werden kann und zum Beispiel in einer Öffnung des ersten Spritzgußteils aushärtet. Das zweite Spritzgußteil ist dann unlösbar mit dem ersten Spritzgußteil verbunden. Dabei ergibt sich der wesentliche Vorteil, daß das zweite Spritzgußteil nicht am ersten montiert werden muß.

Der Reflektor weist insbesondere Stifte auf und das Gehäuse Aussparungen, wobei sich die Stifte im zusammengebauten Zustand durch die Aussparungen erstrecken und der Reflektor so begrenzt beweglich im Gehäuse gelagert ist. Da der Reflektor begrenzt beweglich im Gehäuse gelagert ist, kann ein Leuchtmittel, das in dem Reflektor aufgenommen ist, unterschiedliche Bereiche beleuchten.

Weitere Merkmale und Vorteile ergeben sich aus den Unteransprüchen.

Die Erfindung wird nachfolgend anhand einer Ausführungsform beschrieben, die in den Zeichnungen dargestellt ist. In den Zeichnungen zeigen:
- Figur 1 eine perspektivische Ansicht eines Teils eines Scheinwerfers für ein Fahrzeug mit einem Gehäuse, einem Reflektor und einer Dichtung in einem zusammengebauten Zustand,
- Figur 2 eine perspektivische Ansicht der Dichtung von Figur 1,
- Figur 3 eine perspektivische Ansicht des Gehäuses von Figur 1,
- Figur 4 eine perspektivische Ansicht der an das Gehäuse angeformten Dichtung von Figur 1,
- Figur 5 eine perspektivische Ansicht des Reflektors von Figur 1,
- Figur 6 eine Schnittansicht des Scheinwerfers entlang der Linie VI-VI in Figur 1, und
- Figur 7 eine Schnittansicht des Scheinwerfers entlang der Linie VII-VII in Figur 1.

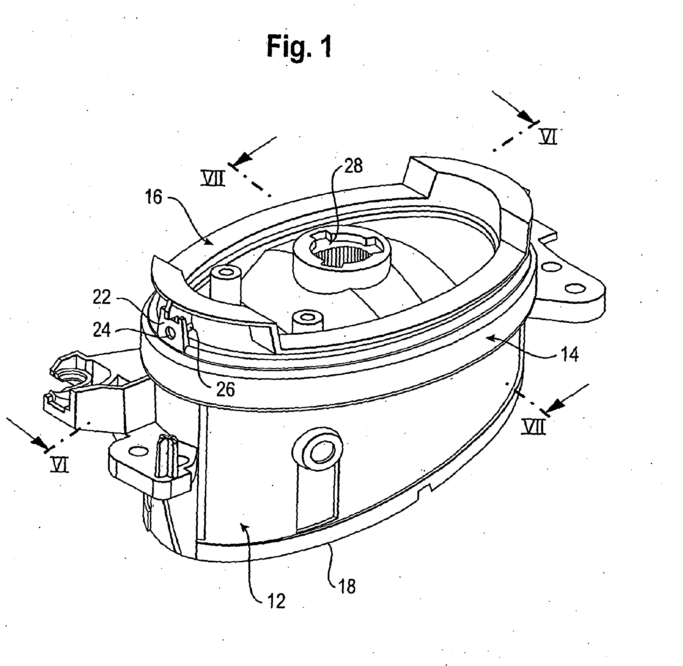

In den Figuren ist ein Teil eines Scheinwerfers dargestellt, wobei Figur 1 eine Gesamtansicht mit einem Gehäuse 12, einer Dichtung 14, die an das Gehäuse 12 angeformt ist, und einem Reflektor 16 zeigt, der größtenteils in dem Gehäuse 12 aufgenommen ist.

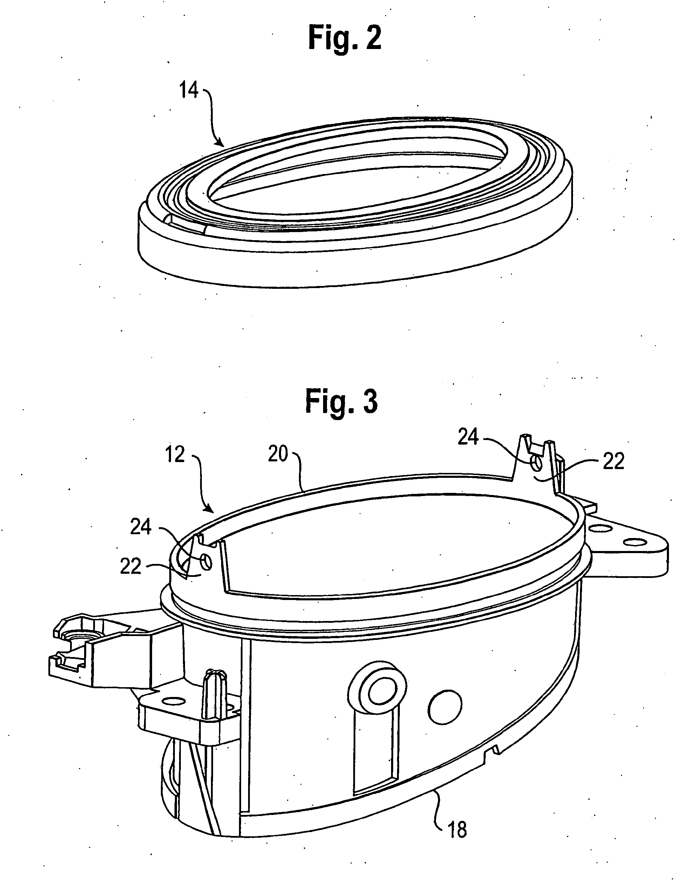

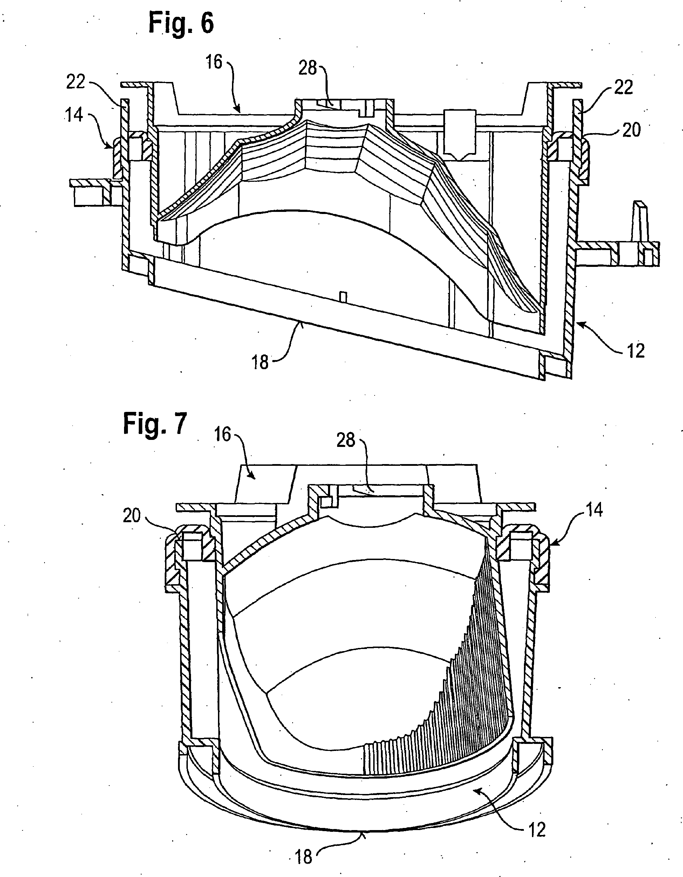

Das im allgemeinen hülsenförmige Kunststoff-Gehäuse 12 (Figur 3) hat ein abgeschrägtes erstes Ende 18 (Figur 6), das von einer nicht gezeigten lichtdurchlässigen Scheibe abgedeckt ist, und ein zweites Ende 20 (Figur 6). An dem zweiten Ende 20 ist die elliptische, in Figur 2 gezeigte Dichtung 14 angeformt.

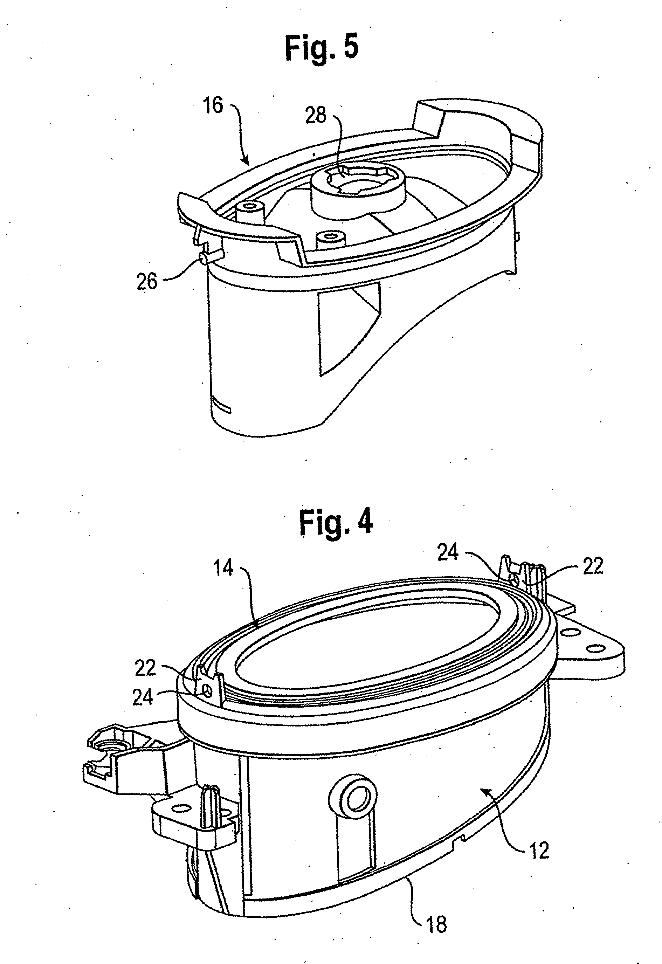

Am Ende 20 des Gehäuses 12 sind zwei Vorsprünge 22 mit jeweils einer runden Aussparung 24 vorgesehen, die sich gegenüberliegen. Durch die Aussparungen 24 des Gehäuses 12 können sich zwei Stifte 26 (Figur 5), die Teil des Reflektors 16 sind, erstrecken. Der konkav gewölbte Reflektor 16, der in den Figuren 5 bis 7 gezeigt ist, hat eine Öffnung 28, die eine Lampenfassung (nicht gezeigt) aufnehmen kann.

Der Scheinwerfer wird folgendermaßen zusammengebaut: Die Dichtung 14 wird im In-Mold-Assembly-Verfahren an das Gehäuse 12 angespritzt und fällt anschließend zusammen mit dem Gehäuse 12 in der in Figur 4 gezeigten Form aus einem nicht gezeigten Spritzwerkzeug. Der separat hergestellte Reflektor 16 wird von (gemäß Figur 4) oben in das Gehäuse 12 eingesetzt und die Stifte 26 in die dazu fluchtenden Aussparungen 24 des Gehäuses 12 gesteckt, so daß der Reflektor 16 begrenzt beweglich im Gehäuse 12 aufgenommen ist. Durch die Öffnung 28 des Reflektors 16 wird anschließend die nicht gezeigte, mit einer Spannungsquelle verbundene Lampenfassung mit einem daran angebrachten Leuchtmittel (nicht gezeigt) eingebracht und das Gehäuse 12 am Ende 18 durch eine nicht gezeigte lichtdurchlässige Scheibe abgedeckt.

Der so hergestellte und zusammengebaute Scheinwerfer, der in den Figuren 1 und 4, 6 und 7 gezeigt ist, erfüllt die Dichtigkeitsanforderungen und ist einfach und schnell herstellbar, insbesondere da die Dichtung 14 an das Gehäuse 12 angeformt ist.

## Patentansprüche

1. Scheinwerfer für ein Fahrzeug, mit
einem Gehäuse (12),
einem Reflektor (16) und
einer Dichtung (14), die zwischen dem Gehäuse (12) und dem Reflektor (16) angeordnet und an das Gehäuse (12) angeformt ist, wobei
am Gehäuse (12) zwei Vorsprünge (22) vorgesehen sind, an denen der Reflektor (16) angreifen kann, ,
**dadurch gekennzeichnet, dass** sich die Vorsprünge (22) durch die Dichtung (14) erstrecken.

2. Scheinwerfer nach Anspruch 1, **dadurch gekennzeichnet, dass** die Dichtung (14) an das Gehäuse (12) angespritzt ist.

3. Scheinwerfer nach einem der vorhergehenden Ansprüche, **dadurch gekennzeichnet, dass** der Reflektor (16) Stifte (26) aufweist und das Gehäuse (12) Aussparungen (24), wobei sich die Stifte (26) im montierten Zustand durch die Aussparungen (24) erstrecken und der Reflektor (16) so begrenzt beweglich im Gehäuse (12) gelagert ist.

## Claims

1. A headlight for a vehicle, comprising
a casing (12),
a reflector (16), and
a seal (14) which is arranged between the casing (12) and the reflector (16) and is integrally molded with the casing (12),
the casing (12) having two projections (22) provided thereon, the reflector (16) being adapted to engage the projections (22),
**characterized in that** the projections (22) extend through the seal (14).

2. The headlight according to claim 1, **characterized in that** the seal (14) is integrally injection-molded with the casing (12).

3. The headlight according to either of the preceding claims, **characterized in that** the reflector (16) has pins (26) and the casing (12) has recesses (24), the pins (26) extending through the recesses (24) in the assembled condition and the reflector (16) being mounted for limited movement in the casing (12) in this way.

## Revendications

1. Phare pour véhicule, comportant
un boîtier (12),
un réflecteur (16) et
un joint (14) qui est agencé entre le boîtier (12) et le réflecteur (16) et est moulé avec le boîtier (12),
deux saillies (22) sur lesquelles le réflecteur (16) peut s'engager étant prévues sur le boîtier (12),
**caractérisé en ce que** les saillies (22) s'étendent à travers le joint (14).

2. Phare selon la revendication 1, **caractérisé en ce que** le joint (14) est moulé par injection sur le boîtier (12).

3. Phare selon l'une des revendications précédentes, **caractérisé en ce que** le réflecteur (16) présente des goupilles (26) et le boîtier (12) présente des évidements (24), les goupilles (26) s'étendant à travers les évidements (24) à l'état monté, et le réflecteur (16) étant ainsi monté dans le boîtier (12) avec mobilité limitée.
